(19)

Europäisches
Patentamt
European
Patent Office
Office européen
des brevets

(11) **EP 2 557 435 A1**

(12) **EUROPEAN PATENT APPLICATION**

(43) Date of publication:
**13.02.2013 Bulletin 2013/07**

(51) Int Cl.:
***G01S 17/00*** (2006.01)

(21) Application number: **11275148.2**

(22) Date of filing: **25.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.08.2011 KR 20110079251**

(71) Applicant: **Samsung Electro-Mechanics Co., Ltd**
**Suwon, Gyunggi-Do (KR)**

(72) Inventors:
• **Ha, Joo Young**
 **Gyunggi-do (KR)**
• **Jeon, Hae Jin**
 **Gyunggi-do (KR)**
• **Song, In Taek**
 **Gyunggi-do (KR)**

(74) Representative: **Powell, Timothy John**
 **Potter Clarkson LLP**
 **The Belgrave Centre**
 **Talbot Street**
 **Nottingham NG1 5GG (GB)**

(54) **Image processing apparatus and method**

(57) There are provided an apparatus and a method for processing an image. The image processing apparatus includes a light source that beams light toward a subject, a first camera that is spaced apart from the light source by more than a predetermined distance and senses light reflected from the subject, and a calculation unit that generates depth information based on reflected light sensed by the first camera, and corrects distortion of the depth information based on at least one of an angle of view of the first camera, a distance between the light source and the first camera, and a distance between the light source and the subject. In a configuration in which the camera generating the depth information and the light source should be spaced apart from each other by a predetermined distance, distorted information caused by a distance difference between the light source and the camera is corrected so that precise depth information can be generated regardless of the positions of the light source and the camera.

FIG. 2

EP 2 557 435 A1

Description

## CROSS-REFERENCE TO RELATED APPLICATIONS

This application claims the priority of Korean Patent Application No. 10-2011-0079251 filed on August 9, 2011 in the Korean Intellectual Property Office, the disclosure of which is incorporated herein by reference.

## BACKGROUND OF THE INVENTION

### Field of the Invention

The present invention relates to an image processing apparatus and method, which can provide precise distance information for a subject included in an image by combining depth information in which distortion has been corrected and the image.

### Description of the Related Art

A time-of-flight (TOF) sensor refers to a sensor that senses light emitted from an infrared ray (IR) source which is reflected from an object and returned to the sensor. The TOF sensor may be connected to a depth camera, able to generate depth information, and may be used in calculating a distance to a specific object. In an image processing apparatus which includes a TOF camera having a TOF sensor and an IR source which generates depth information, the TOF sensor and the IR source are placed as close to each other as possible or, more ideally, placed in the same position.

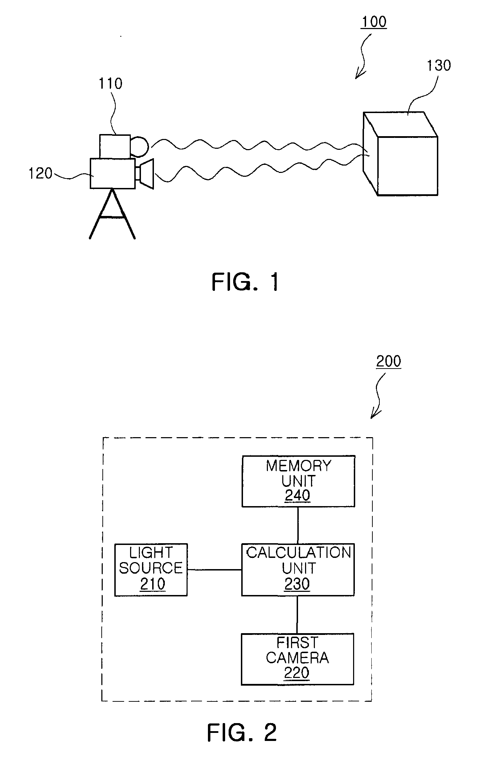

FIG. 1 is a concept view schematically illustrating a general image processing apparatus which generates depth information. The image processing apparatus 100 includes a light source 110 to emit light and a TOF sensor 120 to sense light reflected off, and returning from, a subject 130. Since the TOF sensor 120 generates depth information using a phase difference between the light emitted from the light source 110 and the light reflected and returning from the subject 130, the light source 110 and the TOF sensor 120 may be physically placed as closely as possible to each other in order to significantly reduce an error in a calculated distance.

However, in some cases, the light source 110 and the TOF sensor 120 should be spaced apart from each other by more than a predetermined distance due to spatial constraints, such as in the case of a rearview camera of a car. In this case, the depth information may include an error according to a distance between the light source 110 and the TOF sensor 120. Accordingly, in order to guarantee a degree of freedom in placing the light source 110 and the TOF sensor 120, there is a demand for a method for correcting an error included in depth information according to relative position of the light source 110 and the TOF sensor 120.

## SUMMARY OF THE INVENTION

An aspect of the present invention provides an image processing apparatus and method, which can correct an error included in depth information according to a distance between a camera, which generates the depth information, and a light source.

According to an aspect of the present invention, there is provided an image processing apparatus including: a light source that beams light toward a subject, a first camera that is spaced apart from the light source by more than a predetermined distance and that senses light reflected from the subject, and a calculation unit that generates depth information based on reflected light sensed by the first camera, and corrects the depth information based on at least one of an angle of view of the first camera, a distance between the light source and the first camera, and a calculated distance between the light source and the subject based on the light sensed by the first camera.

The calculation unit may determine the distance between the light source and the subject by using a difference between a phase of the light emitted from the light source and a phase of the reflected light sensed by the first camera.

The image processing apparatus may further include a second camera that photographs the subject and generates an image.

The calculation unit may combine the depth information and the image generated by the second camera.

The depth information may include a distance between the subject included in the image generated by the second camera and the first camera.

The calculation unit may combine the depth information and the image generated by the second camera so that the distance between the subject included in the image generated by the second camera and the first camera is displayed on the image generated by the second camera.

The first camera may be a time-of-flight (TOF) camera.

According to another aspect of the present invention, there is provided an image processing method including: sensing light reflected from a subject, generating depth information based on the sensed light, and correcting distortion of the depth information based on at least one of an angle of view of the first camera which generates the depth information, a distance between a light source which beams light toward the subject and the first camera, and a distance between the light source and the subject.

The generating of the depth information may include generating depth information including the distance between the light source and the subject by using a difference between a phase of the light emitted from the light source and a phase of the sensed light.

The image processing method may further include photographing an image including the subject, and combining the depth information in which the distortion has been corrected and the image.

The depth information in which the distortion has been corrected and the image may be combined so that a distance between the first camera and the subject is displayed on the image.

According to another aspect of the present invention, there is provided an image display apparatus for an automobile, including: the image processing apparatus as described above.

## BRIEF DESCRIPTION OF THE DRAWINGS

The above and other aspects, features and other advantages of the present invention will be more clearly understood from the following detailed description taken in conjunction with the accompanying drawings, in which:

FIG. 1 is a concept view schematically illustrating a general image processing apparatus which generates depth information;
FIG. 2 is a block diagram illustrating an image processing apparatus according to an embodiment of the present invention;
FIG. 3 is a flowchart illustrating an image processing method according to an embodiment of the present invention;
FIGS. 4 and 5 are views to explain a method for correcting distortion included in depth information by an image processing apparatus according to an embodiment of the present invention; and
FIG. 6 is a view illustrating an image output from the image processing apparatus according to an embodiment of the present invention.

## DETAILED DESCRIPTION OF THE INVENTION

Embodiments of the present invention will be described in detail with reference to the accompanying drawings. These embodiments will be described in detail for those skilled in the art in order to practice the present invention. It should be appreciated that various embodiments of the present invention are different but do not have to be exclusive. For example, specific shapes, configurations, and characteristics described in an embodiment of the present invention may be implemented in another embodiment without departing from the spirit and the scope of the present invention. In addition, it should be understood that position and arrangement of individual components in each disclosed embodiment may be changed without departing from the spirit and the scope of the present invention. Therefore, a detailed description described below should not be construed as being restrictive. In addition, the scope of the present invention is defined only by the accompanying claims and their equivalents if appropriate. The similar reference numerals will be used to describe the same or similar functions throughout the accompanying drawing.

Hereinafter, embodiments of the present invention will be described in detail with reference to the accompanying drawings so that those skilled in the art may easily practice the present invention.

FIG. 2 is a block diagram illustrating an image processing apparatus according to an embodiment of the present invention.

An image processing apparatus 200 according to an embodiment may include a light source 210, a first camera 220, a calculation unit 230, and a memory unit 240. Although in this embodiment the light source 210 is included in a block separate from the first camera 220, the calculation unit 230, and the memory unit 240 in order to disclose a configuration of the present invention that can generate precise depth information regardless of a distance between the first camera 220 and the light source 210, it does not indicate that the light source 210 should be necessarily realized by a module separate from the first camera 220, the calculation unit 230, and the memory unit 240. In a case in which the light source 210 is realized by a module separate from the other elements, the light source 210 may be communicably connected with the calculation unit 230 so that the calculation unit 230 can calculate a phase difference between light emitted from the light source 210 and light sensed by the first camera 220 to correct distortion of the depth information.

Hereinafter, the term "depth information" used throughout the specification may be interpreted as meaning a distance from the image processing apparatus 200 to an object which is spaced apart from the image processing apparatus 200 by a predetermined distance. The depth information may be calculated by the calculation unit 230 based on the phase difference between the light output from the light source 210 and the light sensed by the first camera 220, and may refer to a distance to a specific point of the object.

The image processing apparatus 200 may further include a second camera (not shown) to photograph a general image, in addition to the elements shown in FIG. 2. The second camera is a camera that photographs a general color or monochromatic image (including both a moving picture and a still image), and is disposed in the same direction as that of the first camera 220 to photograph a subject which reflects the light that is sensed by the first camera 220. The calculation unit 230 may combine the depth information generated based on the light sensed by the first camera 220 and the image photographed by the second camera, thereby providing a user with distance information on a subject included in the image photographed by the second camera.

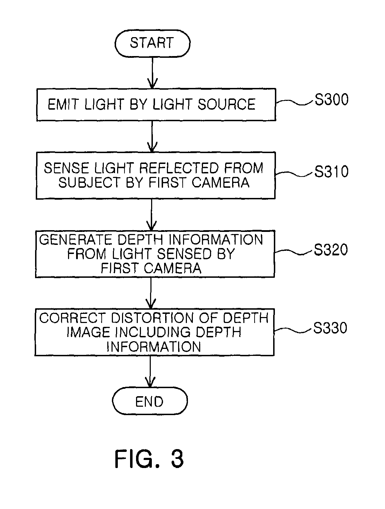

Hereinafter, a configuration of the image processing apparatus 200 shown in FIG. 2 and an image processing method of the image processing apparatus 200 will be explained with reference to the flowchart of FIG. 3.

FIG. 3 is a flowchart to explain an image processing method according to an embodiment of the present invention. Referring to FIG. 3, the image processing method according to the embodiment starts with an operation of emitting light by the light source 210 included in the image processing apparatus 200 (S300).

The light source 210 may emit light having a constant period and a constant phase. For example, the light source 210 may emit infrared rays. In theory, the light source 210 emits a signal of a square-wave form, which includes a turn-on time and a turn-off time as half-periods, as light, and, in practice, the light source 210 emits a signal of a sine wave form as light. The light emitted from the light source 210 is reflected and returns from a specific object when colliding with the object, and the first camera 220 senses the reflected light (S310).

The first camera 220 may be a time-of-flight (TOF) camera that senses light reflected from a subject, which is an object reflecting the light, and may include at least one light receiving sensor therein to sense the light. The light receiving sensor of the first camera 220 may be implemented by a photo-diode. The calculation unit 230 may generate depth information on the subject reflecting the light by using the light sensed by the first camera 220. The depth information generated by the calculation unit 230 may include distance information between the subject and the light source or between the subject and the first camera 220, and may also generate depth information on a plurality of subjects reflecting light emitted from one light source 210.

The calculation unit 230 may generate the depth information based on the light sensed by the first camera 220 (S320). The calculation unit 230 may generate the depth information corresponding to a distance from the light source or the first camera 220 to the subject reflecting the light by using a phase difference between the light emitted from the light source 210 and the light sensed by the first camera 220. Since the phases of the light reflected from each of the plurality of subjects are different according to the distance from the light source 210 or the first camera 220 to the subjects, the calculation unit 230 may generate the depth information on the plurality of subjects. The depth information on the plurality of subjects may be combined in the form of a single depth image.

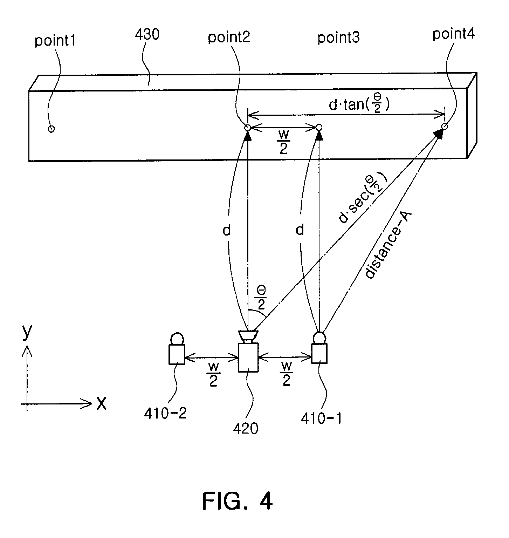

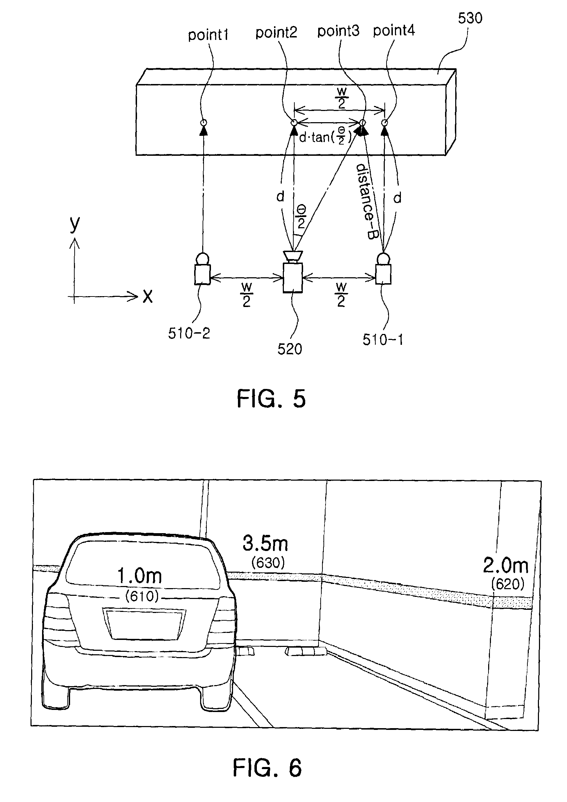

The calculation unit 230 may correct distortion of the depth information or the depth image including the depth information generated on the plurality of subjects (S330). In this embodiment, the calculation unit 230 may correct the distortion of the depth information based on at least one of a distance between the light source 210 and the first camera 220, a shortest distance between the light source 210 or the first camera 220 and the subject, and an angle of view of the first camera 220. This will be explained in detail with reference to FIGS. 4 and 5.

FIGS. 4 and 5 are views to explain a method for correcting distortion included in depth information by an image processing apparatus according to an embodiment of the present invention. FIG. 4 is a view to explain a method for correcting distortion of depth information, in a case in which a distance between light sources 410-1 and 410-2 and a first camera 420 and a subject is relatively long. For convenience of explanation, it is assumed that an image processing apparatus 400 in the embodiment shown in FIG. 4 includes the light sources 410-1 and 410-2 and the first camera 420 which are placed at the same distance from the subject on a Y-axis. However, the invention may be implemented by another embodiment.

In FIG. 4, since the distance between the light sources 410-1 and 410-2 and the first camera 420 and the subject is relatively long, most of the subjects are included in the angle of view "θ" of the first camera 420. The light sources 410-1 and 410-2 and the first camera 420 are placed at different distances from the subject on an X-axis, and it is assumed that the two light sources 410-1 and 410-2 are spaced apart from one first camera 420 as much as w/2 on the left and the right.

When the first camera 420 is to measure depth information on a point 4 of the subject 430, a path through which light emitted from the light source 410-1 located on the right of the first camera 420 is reflected and returns from the subject 430 is expressed by "2*distance_A". When an ideal case in which the first camera 420 and the light source 410-1 are placed at the same position is assumed, a distance by which the light emitted from the light source 410-1 advances to the subject 430 and a distance by which the light reflected from the subject 430 returns to the first camera 420 are the same as a "distance_A". Thus, a separate process of correcting distortion is not required. However, in the case of FIG. 4, the distance by which the light emitted from the light source 410-1 advances and the distance by which the light reflected from the subject 430 advances are different from each other and thus distortion needs to be corrected.

When the angle of view of the first camera 420 is expressed by "θ" and the shortest distance from the first camera 420 or the light source 410-1 to the subject 430 is expressed by "d", a length of the path through which the light reflected from the subject 430 returns to the first camera 420 is defined by "d*sec(θ/2)". Accordingly, unlike in the case of the path of the light of "2*distance_A" on the assumption that the first camera 420 and the light source 410-1 are placed at the same position, the path of the light in this embodiment is defined by "distance_A+d*sec(θ/2)" and thus an error of |distance_A-d*sec(θ/2) | may occur due to a difference between the actual path of the light and the path of the light recognized by the first camera 420. The "distance_A" is defined by following equation 1:

[Equation 1]

$$dis\tan ce\_A = \sqrt{(d*\tan(\frac{\theta}{2}) - \frac{w}{2})^2 + d^2}$$

wherein "θ", "d", and "w" is the angle of view of the first camera, the shortest distance from the first camera 420 or the light source 410-1 to the subject 430, and the distance between the first camera 420 and the light source 410-1, respectively, as defined above.

Since the first camera 420 recognizes that the light source 410-1 is placed at the same position as the first camera 420, the path of light recognized by the first camera 420 is defined by "2d*sec(θ/2)". Accordingly, a ratio of the path of the light recognized by the first camera 420 to the actual path of the light is expressed by following equation 2:

[Equation 2]

$$\frac{actual \quad path \quad of \quad light}{path \quad of \quad light \quad recognized \quad by \quad first \quad camera \quad (420)} = \frac{d*\sec(\frac{\theta}{2}) + \sqrt{(d*\tan(\frac{\theta}{2}) - \frac{w}{2})^2 + d^2}}{2d*\sec(\frac{\theta}{2})}$$

The angle of view "θ" of the first camera 420 and the distance "w" between the first camera 420 and the light source 410-1 are fixed values, and the shortest distance "d" between the first camera 420 or the light source 410-1 and the subject 430 may be calculated by the shortest distance to the subject 430 to be measured by the first camera 420. In practice, when depth information on a point 2 is to be generated, a path of light recognized by the first camera 420 may be expressed by "2d" regardless of an actual path of the light and thus "d" may be calculated from the depth information of the point 2.

On the other hand, when depth information on a point 3 is to be generated, an actual path of light and a path of light recognized by the first camera 420 may be expressed by following equations 3 and 4, respectively. Accordingly, distortion of the depth information may be corrected with reference to only "d" and "w" to the exclusion of the angle of view "θ" of the first camera 420.

[Equation 3]

$$actual \quad moving \quad path \quad of \quad light = d + \sqrt{d^2 + (\frac{w}{2})^2}$$

[Equation 4]

$$path \quad of \quad light \quad recognized \quad by \quad first \quad camera(420) = 2 * \sqrt{d^2 + (\frac{w}{2})^2}$$

FIG. 5 is a view to explain a method for correcting distortion of depth information, when a distance between light sources 510-1 and 510-2 and a first camera 520 and a subject is relatively short. Like in the embodiment shown in FIG. 4, an image processing apparatus 500 may include the light sources 510-1 and 510-2 and the first camera 520 which are placed at the same distance from the substance on a Y-axis. However, another embodiment may be applied to the invention.

Referring to FIG. 5, since a shortest distance "d" between the first camera 510 and the light sources 510-1 and 510-2 and the subject 530 is shorter than that of FIG. 4, the entire subject 530 does not enter an angle of view "θ" of the first camera 520. When depth information on a point 4, which corresponds to an outermost portion of the subject 530 that can be photographed within the angle of view "θ" of the first camera 520, is to be generated, an actual path of light and a path of light recognized by the first camera 520 are expressed by following equations 5 and 6, respectively:

[Equation 5]

$$actual \quad moving \quad path \quad of \quad light = d + \sqrt{d^2 + (\frac{w}{2})^2}$$

[Equation 6]

$$path \quad of \quad light \quad recognized \quad by \quad first \quad camera(520) = 2 * \sqrt{d^2 + (\frac{w}{2})^2}$$

Accordingly, with respect to the point 4, distortion of the depth information may be corrected with reference to "d" and "w" regardless of the angle of view "θ". On the other hand, when depth information on a point 3 is to be generated, an actual path of light is defined by "distance_B+d*sec(θ/2)", whereas a path of light recognized by the first camera 520 is defined by "2d*sec(θ/2)". This is because the first camera 520 recognizes that the light source 510-1 is placed at the same position as the first camera 520 similar to the case of FIG. 4, and "distance_B" is defined by following equation 7:

[Equation 7]

$$dis\tan ce\_B = \sqrt{(\frac{w}{2} - d * \tan(\frac{\theta}{2}))^2 + d^2}$$

Accordingly, a ratio of the path of the light recognized by the first camera 520 to the actual path of the light is expressed by following equation 8:

[Equation 8]

$$\frac{actual \quad path \quad of \quad light}{path \quad of \quad light \quad recognized \quad by \quad first \quad camera \quad (520)} = \frac{d*\sec(\frac{\theta}{2}) + \sqrt{(\frac{w}{2} - d*\tan(\frac{\theta}{2}))^2 + d^2}}{2d*\sec(\frac{\theta}{2})}$$

In comparison with Equation 2, Equation 8 has a difference in the components included in the root, but, since a value obtained by Equation 8 is an absolute value obtained by the square, there is no difference in a value actually calculated. In the same way as in the case in which the distortion of the depth information on the point 4 of FIG. 4 is corrected, the distortion of the depth information included in the point 3 of FIG. 5 may be corrected with reference to the angle of view "θ" of the first camera 520, the shortest distance "d" between the first camera 520 and the light source 510-1 and the subject 530, and the distance "w" between the first camera 520 and the light source 510-1.

FIG. 6 is a view illustrating an image output from the image processing apparatus according to an embodiment. In this embodiment, it is assumed that an image display apparatus for an automobile includes the image processing apparatus according to the embodiment of the present invention. However, various embodiments other than the image display apparatus for the automobile may be applied. Hereinafter, for convenience of explanation, a rearview camera apparatus for an automobile will be explained by way of an example.

When a driver wishes to back up a car in an environment such as a parking lot, the rearview camera apparatus photographs a rearview image with a camera and outputs the image on a screen installed on center fascia of the car or the like so that the driver can drive the car safely. When the image processing apparatus according to an embodiment of the present invention is applied to the rearview camera apparatus for an automobile, the rearview camera device may display the rearview image for the driver and simultaneously may inform the driver of distances to objects located in the rear of the car such as another vehicle, a wall, a pillar, or the like.

Referring to FIG. 6, when the driver wishes to back up the car in the parking lot, distances to another vehicle 610 already parked, a pillar 620, and a wall 630 may be displayed by colors, numeral values, or the like. As described above, since the calculation unit 230 of the image processing apparatus 200 may generate the depth information on the plurality of subjects from the light sensed by the first camera 220, the distance information on the plurality of objects 610-630 may be displayed for the driver simultaneously as shown in FIG. 6. Also, the distortion of the depth information may be corrected with reference to at least one of the angle of view of the first camera 220, the distances to the objects 610-630, and the distance between the first camera 220 and the light source 210, and the depth information in which the distortion has been corrected may be combined with the image photographed by the second camera so that precise distance information can be provided for the user.

As set forth above, according to the embodiments of the present invention, by correcting the distortion of the depth information on the basis of the angle of view of the first camera generating the depth information, the distance between the first camera and the light source, and the distance between the light source and the subject, the first camera and the light source can be placed freely without physical constraints, and precise depth information can be provided for the user.

While the present invention has been shown and described in connection with the embodiments, it will be apparent to those skilled in the art that modifications and variations can be made without departing from the spirit and scope of the invention as defined by the appended claims.

**Claims**

1. An image processing apparatus comprising:

   a light source beaming light toward a subject;
   a first camera spaced apart from the light source by more than a predetermined distance and sensing light reflected from the subject; and
   a calculation unit generating depth information based on reflected light sensed by the first camera, and correcting the depth information based on at least one of an angle of view of the first camera, a distance between the light source and the first camera, and a calculated distance between the light source and the subject based on the light sensed by the first camera.

2. The image processing apparatus of claim 1, wherein the calculation unit determines the distance between the light source and the subject by using a difference between a phase of the light emitted from the light source and a phase of the reflected light sensed by the first camera.

3. The image processing apparatus of claim 1, further comprising a second camera that photographs the subject and generates an image.

4. The image processing apparatus of claim 3, wherein the calculation unit combines the depth information and the image generated by the second camera.

5. The image processing apparatus of claim 4, wherein the depth information includes a distance between the subject included in the image generated by the second camera and the first camera.

6. The image processing apparatus of claim 4, wherein the calculation unit combines the depth information and the image generated by the second camera so that the distance between the subject included in the image generated by the second camera and the first camera is displayed on the image generated by the second camera.

7. The image processing apparatus of claim 1, wherein the first camera is a time-of-flight (TOF) camera.

8. An image processing method comprising:

   sensing light reflected from a subject;
   generating depth information based on the sensed light; and
   correcting distortion of the depth information based on at least one of an angle of view of the first camera generating the depth information, a distance between a light source beaming light toward the subject and the first camera, and a distance between the light source and the subject.

9. The image processing method of claim 8, wherein the generating of the depth information includes generating depth information including the distance between the light source and the subject by using a difference between a phase of the light emitted from the light source and a phase of the sensed light.

10. The image processing method of claim 8, further comprising:

    photographing an image including the subject; and
    combining the depth information in which the distortion has been corrected and the image.

11. The image processing method of claim 10, wherein the depth information in which the distortion has been corrected and the image are combined so that a distance between the first camera and the subject is displayed on the image.

12. An image display apparatus for an automobile comprising the image processing apparatus of any one of claims 1 to 7.

FIG. 1

FIG. 2

```
                    ┌─────────────┐
                    │    START    │
                    └──────┬──────┘
                           │
                           ▼
          ┌────────────────────────────────┐
          │   EMIT LIGHT BY LIGHT SOURCE    │────S300
          └────────────────┬───────────────┘
                           │
                           ▼
          ┌────────────────────────────────┐
          │   SENSE LIGHT REFLECTED FROM    │────S310
          │    SUBJECT BY FIRST CAMERA      │
          └────────────────┬───────────────┘
                           │
                           ▼
          ┌────────────────────────────────┐
          │  GENERATE DEPTH INFORMATION     │
          │     FROM LIGHT SENSED BY        │────S320
          │        FIRST CAMERA             │
          └────────────────┬───────────────┘
                           │
                           ▼
          ┌────────────────────────────────┐
          │  CORRECT DISTORTION OF DEPTH    │
          │    IMAGE INCLUDING DEPTH        │────S330
          │        INFORMATION              │
          └────────────────┬───────────────┘
                           │
                           ▼
                    ┌─────────────┐
                    │     END     │
                    └─────────────┘
```

# FIG. 3

FIG. 4

FIG. 5

FIG. 6

Europäisches
Patentamt

European
Patent Office

Office européen
des brevets

# EUROPEAN SEARCH REPORT

Application Number

EP 11 27 5148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 887 318 A2 (NISSAN MOTOR [JP]) 13 February 2008 (2008-02-13) | 1-12 | INV. G01S17/00 |
| Y | * paragraph [0001] * <br> * paragraph [0024] - paragraph [0025] * <br> * paragraph [0026] - paragraph [0027] * <br> ----- | 3-6,10, 11 | |
| X | US 2006/061753 A1 (HARRIS MICHAEL [GB] ET AL) 23 March 2006 (2006-03-23) | 1-11 | |
| Y | * the whole document * <br><br> ----- | 3-6, 10-12 | |
| X | US 7 679 751 B1 (KABLOTSKY JOSHUA A [US]) 16 March 2010 (2010-03-16) | 1-11 | |
| Y | * column 4, line 32 - line 48; figures 2, 4 * <br> ----- | 3-6, 10-12 | |
| X | US 2005/180149 A1 (ALBOU PIERRE [FR] ET AL) 18 August 2005 (2005-08-18) | 1-12 | |
| Y | * the whole document * <br><br><br> ----- | 3-6,10, 11 | |
| Y | US 2005/220450 A1 (ENOMOTO KAZUHITO [JP] ET AL) 6 October 2005 (2005-10-06) * paragraphs [0071], [0085]; figures 12A,B, 14A-C * <br> ----- | 3-6, 10-12 | TECHNICAL FIELDS SEARCHED (IPC) <br><br> G01S |
| Y | US 6 002 423 A (RAPPAPORT SAUL [US] ET AL) 14 December 1999 (1999-12-14) * column 5, line 43 - line 56 * <br> ----- | 3-6,10, 11 | |

The present search report has been drawn up for all claims

| Place of search | Date of completion of the search | Examiner |
|---|---|---|
| Munich | 16 March 2012 | Beer, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 11 27 5148

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2012

| Patent document cited in search report | | Publication date | Patent family member(s) | | Publication date |
|---|---|---|---|---|---|
| EP 1887318 | A2 | 13-02-2008 | EP | 1887318 A2 | 13-02-2008 |
| | | | JP | 2008067362 A | 21-03-2008 |
| | | | US | 2008044060 A1 | 21-02-2008 |
| US 2006061753 | A1 | 23-03-2006 | AT | 347113 T | 15-12-2006 |
| | | | AU | 2003269271 A1 | 04-05-2004 |
| | | | DE | 60310107 T2 | 03-05-2007 |
| | | | EP | 1549974 A1 | 06-07-2005 |
| | | | JP | 2006502401 A | 19-01-2006 |
| | | | US | 2006061753 A1 | 23-03-2006 |
| | | | WO | 2004034084 A1 | 22-04-2004 |
| US 7679751 | B1 | 16-03-2010 | NONE | | |
| US 2005180149 | A1 | 18-08-2005 | AT | 507492 T | 15-05-2011 |
| | | | EP | 1553429 A1 | 13-07-2005 |
| | | | FR | 2864932 A1 | 15-07-2005 |
| | | | JP | 2005195601 A | 21-07-2005 |
| | | | US | 2005180149 A1 | 18-08-2005 |
| US 2005220450 | A1 | 06-10-2005 | CN | 1681329 A | 12-10-2005 |
| | | | JP | 2005295442 A | 20-10-2005 |
| | | | US | 2005220450 A1 | 06-10-2005 |
| US 6002423 | A | 14-12-1999 | AU | 1693297 A | 11-08-1997 |
| | | | CA | 2243494 A1 | 24-07-1997 |
| | | | EP | 0875117 A1 | 04-11-1998 |
| | | | JP | 3100639 B2 | 16-10-2000 |
| | | | JP | H11506892 A | 15-06-1999 |
| | | | US | 6002423 A | 14-12-1999 |
| | | | WO | 9726761 A1 | 24-07-1997 |

EPO FORM P0459

For more details about this annex : see Official Journal of the European Patent Office, No. 12/82

**EP 2 557 435 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110079251